(19) Europäisches Patentamt European Patent Office Office européen des brevets

(11) **EP 1 817 560 B1**

(12) **EUROPÄISCHE PATENTSCHRIFT**

(45) Veröffentlichungstag und Bekanntmachung des Hinweises auf die Patenterteilung:
**28.03.2012 Patentblatt 2012/13**

(21) Anmeldenummer: 05813620.1

(22) Anmeldetag: **25.11.2005**

(51) Int Cl.:
*G01L 9/00* (2006.01)        *G01L 9/12* (2006.01)
*G01L 19/14* (2006.01)

(86) Internationale Anmeldenummer:
**PCT/EP2005/056220**

(87) Internationale Veröffentlichungsnummer:
**WO 2006/058861 (08.06.2006 Gazette 2006/23)**

(54) **DRUCKSENSOR**

PRESSURE SENSOR

CAPTEUR DE PRESSION

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **30.11.2004 DE 102004057967**

(43) Veröffentlichungstag der Anmeldung:
**15.08.2007 Patentblatt 2007/33**

(73) Patentinhaber: **Endress u. Hauser GmbH u.Co. KG
79689 Maulburg (DE)**

(72) Erfinder:
• **DREWES, Ulfert
79379 Müllheim (DE)**

• **HEGNER, Frank
79540 Lörrach (DE)**

(74) Vertreter: **Andres, Angelika Maria
Endress+Hauser (Deutschland) AG+Co. KG
PatServe
Colmarer Strasse 6
79576 Weil am Rhein (DE)**

(56) Entgegenhaltungen:
**WO-A-02/063263        WO-A-2005/012865
DE-A1- 19 628 551**

**Beschreibung**

Die vorliegende Erfindung betrifft Drucksensoren mit einer medienberührenden Dichtung.

Für bestimmte Anwendungsfälle scheiden gängige O-Ring oder Formdichtungen aus einem elastomerischen Werkstoff bei Drucksensoren aus, weil sie beispielsweise den auftretenden chemischen und thermischen Bedingungen nicht standhalten. Metallische Dichtungen können aufgrund der für sie erforderlichen Einspannkräfte in vielen Fällen keinen Ersatz bieten.

In diesen Fällen kommen Dichtungen, insbesondere Flachdichtungen, aus einem gegen Chemikalien beständigen organischen Material, z.B. PTFE, zum Einsatz.

Dabei erweist es sich jedoch als schwierig, die Dichtungen einerseits hinreichend dicht einzuspannen und andererseits die Messgenauigkeit des abzudichtenden Drucksensors nicht zu beeinträchtigen.

So offenbart beispielsweise Kathan in der DE 196 28 551 B4 einen Drucksensor mit einer in einem Gehäuse angeordneten Druckmesszelle, zwischen denen eine PTFE-Dichtung eingespannt ist. Die Dichtung weist eine Stärke von 0,8 mm und eine Dichtflächenbreite von etwa 5 mm auf, wobei die Dichtung vollflächig eingespannt ist. Die vergleichsweise massive Dichtung gemäß Kathan ist gekammert, wodurch verhindert werden soll, dass das thermoplastische Dichtmaterial durch die Flächenpressung zwischen den Dichtflächen zu stark verdrängt wird. Die erforderlichen Einspannkräfte für eine zuverlässige Dichtung beeinträchtigen die Messgenauigkeit des Drucksensors, zumindest in kleinen Druckbereichen, z.B. bei Drücken unter 1 bar. Außerdem sind bei der von Kathan beschriebenen Dichtungsanordnung Hystereseerscheinungen zu erwarten, da die dort beschriebenen elastischen gehäuseseitigen Dichtflächen zwingend zu Scherbewegungen in dem thermoplastischen Dichtungsmaterial führen.

Die Veröffentlichung WO 02/063263 A1 offenbart ebenfalls einen Drucksensor mit elastischen gehäuseseitigen Dichtflächen.

Die Veröffentlichung WO2005012865 A1 der Anmelderin der vorliegenden Anmeldung, welche stand der technik gemäß Arb.54(3) EPUrs, offenbart stattdessen einen Druckaufnehmer mit einer Dichtungsanordnung, bei welcher eine PTFE-Flachdichtung mittels der formsteifen Dichtflächen eines Keramikrings gegen eine planare Gegenfläche gedrückt wird, wobei die Dichtfläche des Keramikrings mehrere ringförmige konzentrische Stege aufweist, welche einerseits den Dichtungsring eindrücken und andererseits in ihren Zwischenräumen eine Art Kammerung für das Dichtungsmaterial bewirken. Wenngleich diese Dichtungsgeometrie grundsätzlich ihren Zweck erfüllt und mit geringeren Einspannkräften als die Dichtungsgeometrie gemäß Kathan auskommt, so erfordert die exakte Einstellung der Einspannkräfte doch große Sorgfalt und ist insofern aufwendig.

Der vorliegenden Erfindung liegt daher die Aufgabe zugrunde, einen Drucksensor bereitzustellen, welcher die Nachteile des Stands der Technik überwindet. Die Aufgabe wird erfindungsgemäß gelöst durch den Drucksensor gemäß des unabhängigen Patentanspruchs 1.

Der erfindungsgemäße Drucksensor umfasst eine Druckmesszelle mit einer ersten formsteifen, im wesentlichen planaren Dichtfläche;
einen Gegenkörper mit einer Öffnung die von einer zweiten formsteifen, im wesentlichen planaren Dichtfläche umgeben ist; und
ein Gehäuse mit einer Medienöffnung und einer ringförmigen axialen Anschlagfläche, welche die Medienöffnung umschließt;
wobei die Druckmesszelle und der Gegenkörper mit einer Einspannkraft in axialer Richtung, welche im wesentlichen senkrecht zu den Ebenen der Dichtflächen verläuft, gegeneinander gedrückt werden;
wobei zwischen der ersten Dichtfläche und der zweiten Dichtfläche eine Flachdichtung mittels der axialen Einspannkraft freiliegend im Hauptschluss eingespannt ist, wobei der Gegenkörper als ein Entkopplungsring ausgestaltet ist, welcher zwischen der Anschlagfläche und der Druckmesszelle in dem Gehäuse angeordnet und axial eingespannt ist,
wobei die erste Flachdichtung zwischen der ersten Dichtfläche der Druckmesszelle und der zweiten Dichtfläche auf der der Druckmesszelle zugewandten Seite des Entkopplungsrings und eine zweite Flachdichtung zwischen dem Entkopplungsring und der Anschlagfläche vorgesehen sind, wobei
der Entkopplungsring einen ringförmigen, insbesondere zylindrischen, Entkopplungsabschnitt aufweist, dadurch gekennzeichnet, dass
sich zumindest von einer Stirnfläche des Entkopplungsabschnitts, welche der Druckmesszelle zugewandt ist, ein ringförmiger Vorsprung in axialer Richtung erstreckt, auf dessen Stirnfläche die zweite Dichtfläche ausgebildet ist.

Die Einspannung der Flachdichtung im Hauptschluss bedeutet, dass die gesamte axiale Einspannkraft über die Flachdichtung übertragen wird.

Die freiliegende Einspannung bedeutet, dass eine Bewegung oder Verformung der Flachdichtung parallel zu den planaren Dichtflächen nicht durch zusätzliche Konstruktionselemente, etwa eine Kammerung, begrenzt ist.

Die Flachdichtung weist vorzugsweise einen organischen Werkstoff, insbesondere einen Werkstoff mit thermoplastischen Eigenschaften auf, beispielsweise PTFE. Hierbei kann PTFE ebenso in der reinen Form wie auch als modifiziertes PTFE vorliegen. Die Flachdichtung kann durch die axiale Einspannung so weit komprimiert sein, dass der eingespannte Bereich der Flachdichtung transparent erscheint.

Nach einem weiteren Gesichtspunkt der Erfindung weist die Flachdichtung eine maximale Flächenpressung $pd_{max}$ auf, die beispielsweise mindestens etwa 20 MPa, vorzugsweise mindestens 22,5 MPa beträgt. Nach einem weiteren Gesichtspunkt der Erfindung weist die Flachdichtung eine minimale Flächenpressung pdmin auf, die beispielsweise höchstens etwa 12,5 MPa, vorzugsweise höchstens 10 MPa und weiter bevorzugt höchstens 8 MPa beträgt.

Die Bezeichnungen maximale bzw. minimale Flächenpressung beziehen sich auf den oberen bzw. unteren Grenzwert der Flächenpressung, bei dem die Flachdichtung in einem erfindungsgemäßen Drucksensor dem spezifizierten Nenndruckbereich einschließlich des Überlastdrucks standhält. Falls die Druckmesszelle beispielsweise mit einer elastischen Vorspannung -gegen die Flachdichtung gepresst wird, muss die Flachdichtung bei der maximalen Flächenpressung dem minimalen Mediendruck und ggf. einem äußeren Atmosphärendruck standhalten. Bei der minimalen Flächenpressung muss sie dagegen dem Überlastdruck standhalten; dies folgt daraus, dass die Flächenpressung durch den Mediendruck reduziert wird. Bei den maximalen und minimalen Flächenpressungen handelt es sich also um spezifische Eigenschaften der

Dichtungsanordnung, welche die Flachdichtung und die zwei Dichtflächen umfasst, zwischen denen die Flachdichtung eingespannt ist. Einflussgrößen hiefür können die Materialeigenschaften des Dichtungsmaterials, die Abmessungen der Flachdichtung, die Abmessungen der Dichtflächen und ggf. auch deren Materialeigenschaften sein, beispielsweise deren Oberflächenrauhigkeit.

In einer Weiterbildung der Erfindung ist die Druckmesszelle bezüglich des Gegenkörpers in axialer Richtung elastisch vorgespannt, um ggf. die Auswirkung unterschiedlicher Wärmeausdehnungskoeffizienten der verwendeten Materialien und ein eventuell auftretendes Kriechen bzw. Setzen der Flachdichtung auszugleichen. Dies kann beispielsweise dann von Interesse sein, wenn ein Drucksensor eine keramische Druckmesszelle umfasst, die in einem metallischen Gehäuse angeordnet ist.

Die elastische Vorspannung FV ist so zu wählen, dass die resultierende Flächenpressung pdr der Flachdichtung über den gesamten Nenndruckbereich des Drucksensors einschließlich des zugelassenen Überlastdruckbereichs eine ausreichende Dichtigkeit bewirkt. Dies ist dann gewährleistet, wenn die resultierende Flächenpressung pdr stets zwischen den oben angegebenen Werten für die maximale Flächenpressung pdmax und die minimale Flächenpressung pdmin liegt. Im Sinne einer optimalen Messgenauigkeit ist eine minimierte elastische Vorspannung vorteilhaft. Allerdings ist hierbei zu beachten, dass je kleiner die elastische Vorspannung FV gewählt ist, desto größer wirkt sich der relative Einfluss einer Druckbeaufschlagung der Messzelle auf Einspannkraft und damit auf die Flächenpressung der Druckmesszelle aus. Die minimale elastische Vorspannung FVmin ergibt sich aus dem Verhältnis der gewählten maximalen Flächenpressung zur gewählten minimalen Flächenpressung Rdp = pdmax/pdmin.

Das Verhältnis RFV der Anpresskraft der Druckmesszelle gegen die Flachdichtung aufgrund der elastischen Vorspannkraft FV zur elastischen Vorspannkraft abzüglich der entlastenden Druckbeaufschlagung der Druckmesszelle mit dem Überlastdruck pÜ darf Rdp nicht überschreiten. FVmin ist also erreicht, wenn RFV=Rdp.

Demnach gilt für die minimale elastische Vorspannkraft FVmin:

$$FVmin= A*p\ddot{U}*(Rdp/(Rdp-1)),$$

wobei A die wirksame Fläche der Druckmesszelle ist, die von der Flachdichtung umgeben ist.

Demnach kann die elastische Vorspannung um so kleiner gewählt werden, je größer das Verhältnis Rdp zwischen zulässiger maximaler Flächenpressung und zulässiger minimaler Flächenpressung ist.

Hierbei erweist es sich als besondere Schwierigkeit, dass die oberen und unteren Grenzwerte der Flächenpressung und damit das Verhältnis Rdp von dem Aufbau der Dichtung abhängig sind.

Es hat sich gezeigt, dass freiliegende Dichtungen ohne Kammerung große Rdp-Werte ermöglichen und somit geringe Einspannkräfte zulassen.

Gemäß einer Weiterbildung der Erfindung ist für einen erfindungsgemäßen Drucksensor mit spezifizierten Überlastdruck pÜ die elastische Vorspannung FV beispielsweise so zu wählen, dass FV einer minimalen elastischen Vorspannung FVmin für den spezifizierten Überlastdruck und ein Verhältnis Rpb von mindestens 1,75 vorzugsweise mindestens 2,0 und besonders bevorzugt mindestens 2,25 entspricht. Diese Werte für Rpb gelten vorzugsweise über den gesamten Temperaturbereich für den der Drucksensor spezifiziert ist, beispielsweise von -20°C bis 80°C.

Die Einspannbreite BE für die Flachdichtung ist vorzugsweise so zu wählen, dass der Quotient aus der gewählten elastischen Vorspannung FV und der eingespannten Fläche der Flachdichtung, der angestrebten maximalen Flächenpressung pdmax der Flachdichtung entspricht. Die Einspannbreite bezeichnet den kürzesten Pfad durch die Flachdichtung zwischen den durch die Flachdichtung voneinander getrennten Bereichen. Es ist derzeit bevorzugt, dass die Einspannbreite über den gesamten Umfang der Flachdichtung weitgehend konstant ist.

Nach einem weiteren Gesichtspunkt der Erfindung ist eine geringe Einspannbreite besonders vorteilhaft, da diese bei einer geringen elastischen Vorspannung in axialer Richtung eine ausreichende Flächenpressung bewirkt um die Flachdichtung bis zum Erreichen eines stationären Dichtzustands fließen zu lassen. Diese Art der Einspannung erweist sich als vorteilhaft, um große Rpb-Werte zu erzielen.

Vorteilhafte Ergebnisse lassen sich insbesondere mit dünnen Flachdichtungen erzielen. Die Flachdichtung weist beispielsweise im eingespannten Zustand eine Materialstärke auf von nicht mehr als 0,2 mm, vorzugsweise nicht mehr als 0,15 mm und besonders bevorzugt von nicht

mehr als 0,12 mm. Andererseits ist es vorteilhaft, wenn die Flachdichtung eine Materialstärke aufweist, die ausreicht, um Rauhigkeiten und Defekte in den Dichtflächen auszugleichen. Dementsprechend weist die Flachdichtung beispielsweise im eingespannten Zustand eine Materialstärke auf von nicht weniger als 0,03 mm, vorzugsweise nicht weniger als 0,06 mm und besonders bevorzugt von nicht weniger als 0,08 mm.

Die erste Dichtfläche kann fluchtend mit einer Stirnfläche der Druckmesszelle ausgebildet sein. Die Einspannbreite wird in diesem Fall durch die zweite Dichtfläche definiert, die auf der ersten Dichtfläche aufsetzt.

Es ist vorteilhaft, wenn die Flachdichtung im eingespannten Zustand einer Temperung bei einer Temperatur von nicht weniger als 80°C, vorzugsweise von nicht weniger als 100°C und besonders bevorzugt von nicht weniger als 150°C ausgesetzt war. Die Temperierzeit kann beispielsweise zwischen etwa 1 h und 10 h betragen. Bevorzugt beträgt die Temperierzeit nicht weniger als 2 h und nicht mehr als 8 h.

Gemäß eines weiteren Gesichtspunkts der Erfindung ist der Gegenkörper als ringförmiger Entkopplungskörper bzw. als Entkopplungsring zwischen einem metallischen Gehäuse und einer keramischen Druckmesszelle ausgebildet. Der Begriff "ringförmig" bezieht sich im vorliegenden Zusammenhang nicht nur auf Kreisringe, sondern auf jegliche in sich geschlossenen Pfade um eine Öffnung. Diese können u.a. auch einen ovalen, rechteckigen, hexagonalen, oder einen beliebigen anderen polygonalen Verlauf aufweisen.

Gemäß dieses Gesichtspunkts der Erfindung umfasst der erfindungsgemäße Drucksensor weiterhin ein Gehäuse mit einer Medienöffnung und einer ringförmigen axialen Anschlagfläche, welche die Medienöffnung umschließt; und eine Einspannvorrichtung; wobei der als Entkopplungsring ausgebildete Gegenkörper zwischen der Anschlagfläche und der Druckmesszelle in dem Gehäuse angeordnet und mittels der Einspannvorrichtung axial eingespannt ist. Neben der ersten Flachdichtung zwischen der ersten Dichtfläche der Druckmesszelle und der zweiten Dichtfläche auf der der Druckmesszelle zugewandten Seite des Entkopplungsrings ist eine zweite Dichtung zwischen dem Entkopplungsring und der Anschlagfläche vorgesehen. Die zweite Dichtung kann beispielsweise ebenfalls als eine Flachdichtung ausgebildet sein.

Die Druckmesszelle kann eine Messmembran aus einem ersten Material und einen Grundkörper aus einem zweiten Material aufweisen. Das erste und das zweite Material können identisch sein, sofern dies nicht der Fall ist sollte das zweite Material mechanische und/ oder thermische Eigenschaften aufweisen, welche denen des ersten Materials weitgehend entsprechen bzw.

gleichen. Der Entkopplungsring sollte ebenfalls aus einem Material gefertigt sein, dessen mechanische und/ oder thermische Eigenschaften denen des ersten Materials weitgehend entsprechen bzw. gleichen. Vorzugsweise ist der Entkopplungsring ebenfalls aus dem ersten Material gefertigt. Das erste Material kann beispielsweise eine Keramik, insbesondere Korund, oder ein einkristallines Material sein. In einer derzeit bevorzugten Ausführungsform weisen die Messmembran und der Entkopplungskörper Korund in einer Reinheit von 99,9% auf.

Der Entkopplungsring ist vorzugsweise so gestaltet, dass radiale Kräfte, die zwischen dem Entkopplungsring und der axialen Anschlagfläche aufgrund von Wärmeausdehnungsunterschieden auftreten können, allenfalls zu vernachlässigbaren Verformungen des Entkopplungsrings führen. Dies kann beispielsweise durch eine gewisse Steifigkeit erzielt werden und andererseits durch die Verwendung eines Entkopplungsrings mit zwei planparallelen Dichtflächen an den gegenüberliegenden Stirnflächen des Entkopplungsrings. Somit können Wärmeausdehnungsunterschiede zwischen der axialen Anschlagfläche und dem Entkopplungsring im wesentlichen ausschließlich zu tangentialen und radialen Scherkräften führen, die weitestgehend im Bereich des zweiten Dichtungselementes zwischen dem Entkopplungsring und der axialen Anschlagfläche abgebaut werden. Im Ergebnis wird damit Temperaturhysterese im Bereich der Druckmesszelle weitestgehend eliminiert.

In einer Ausgestaltung des Entkopplungsrings weist dieser einen ringförmigen, beispielsweise zylindrischen, Entkopplungsabschnitt auf, wobei sich zumindest von einer Stirnfläche des Entkopplungsabschnitts, welche der Druckmesszelle zugewandt ist, ein ringförmiger Vorsprung in axialer Richtung erstreckt, auf dessen Stirnfläche die zweite Dichtfläche ausgebildet ist. Der Entkopplungsabschnitt dient dazu, unerwünschte Kräfte und Momente aufgrund von Gehäuseverformungen von der Druckmesszelle fern zu halten. Die Wandstärke des Entkopplungsabschnitts, also dessen Materialstärke in radialer Richtung, ist zu diesem Zweck unabhängig von der Breite der zweiten Dichtfläche, welche die Einspannbreite der Flachdichtung definiert. Insbesondere ist die Wandstärke größer als die Breite der zweiten Dichtfläche. Die Materialstärke des Entkopplungsabschnitts beträgt vorzugsweise nicht weniger als das 4-fache weiter bevorzugt nicht weniger als das 8-fache und besonders bevorzugt nicht weniger als das 12-fache der Breite der zweiten Dichtfläche.

Weiterhin beträgt die Höhe des Entkopplungsabschnitts in axialer Richtung vorzugsweise nicht weniger als das 0,25-fache und besonders bevorzugt nicht weniger als die Hälfte der Wandstärke des Entkopplungsabschnitts.

Die Höhe des Entkopplungsabschnitts in axialer Richtung beträgt vorzugsweise mehr als das 1,5 fache und bevorzugt nicht mehr als das 0,8 fache der Wandstärke des Entkopplungsabschnitts.

Der axiale Abstand der zweiten Dichtfläche von der angrenzenden Stirnfläche des Entkopplungsabschnitts ist vorzugsweise nicht kleiner als die Differenz zwischen der Materialstärke der Flachdichtung im nicht eingespannten Zustand und der Materialstärke der Flachdichtung im eingespannten Zustand, bevorzugt beträgt der axiale Abstand der zweiten Dichtfläche von der angrenzenden Stirnfläche des Entkopplungsabschnitts entweder mindestens das 1,1-fache der obigen Differenz oder mindestens die Materialstärke der Materialstärke der Flachdichtung im nicht eingespannten Zustand. Hierdurch ist sichergestellt, dass sämtliche axialen Einspannkräfte über die zweite Dichtfläche übertragen werden und somit zur definierten Flächenpressung der Flachdichtung im Hauptschluss beitragen.

Die radiale Position der zweiten Flachdichtung ist prinzipiell beliebig auf der Stirnfläche des Entkopplungsabschnitts wählbar. Beispielsweise kann die zweite Dichtfläche um den mittleren Radius der angrenzenden Stirnfläche des Entkopplungsabschnitts verlaufen. Wenn dagegen Toträume und Spalte im druckführenden Bereich zu vermeiden sind, ist es vorteilhaft, wenn der Innenradius der zweiten Dichtfläche mit dem Innenradius der angrenzenden Stirnfläche des Entkopplungsabschnitts fluchtet.

Die Dichtungsanordnung zwischen dem Entkopplungsring und der axialen Anschlagfläche des Gehäuses kann prinzipiell identisch zur soeben beschriebenen Dichtungsanordnung zwischen dem Entkopplungsring und der Druckmesszelle aufgebaut sein. D.h. von der der axialen Anschlagfläche zugewandten Stirnfläche des Entkopplungsabschnitt kann sich ein zweiter Vorsprung in axialer Richtung erstrecken, an dessen Stirnfläche eine dritte Dichtfläche vorgesehen ist. Grundsätzlich kann die Dimensionierung und Positionierung der dritten Dichtfläche unabhängig von der zweiten Dichtfläche verlaufen, in einer derzeit erwogenen Ausgestaltung weist der Entkopplungskörper jedoch eine Symmetrieebene auf, die parallel zur zweiten Dichtfläche verläuft. Dementsprechend kann zwischen der dritten Dichtfläche und der axialen Anschlagfläche eine zweite Flachdichtung vorgesehen sein, die hinsichtlich der Materialstärke und der Radien mit der ersten Flachdichtung zwischen der Druckmesszelle und der zweiten Dichtfläche übereinstimmt.

Die Erfindung wird nun anhand der in den Zeichnungen dargestellten Ausführungsbeispiele erläutert.

Es zeigen:

Fig. 1: Eine Schnittansicht einer Dichtungsanordnung eines erfindungsgemäßen Drucksensors; und
Fig. 2: Eine Schnittansicht durch einen erfindungsgemäßen Drucksensor.

Der Drucksensor 1 umfasst eine zylindrische Druckmesszelle 2, die in einem zumindest abschnittsweise zylindrischen Gehäuse 3 angeordnet ist. Die Rotationsachse ist als gestrichelte Linie in der Zeichnung angedeutet. Die Druckmesszelle 2 umfasst einen zylindrischen Grundkörper 20 und eine Messmembran 21, welche mit einer Stirnseite des Grundkörpers über eine ringförmige Fügestelle 22, die beispielsweise ein Glas oder ein Aktivhartlot aufweisen kann, verbunden ist. Der Grundkörper und die Messmembran weisen einen keramischen Werkstoff, insbesondere Korund, auf. Zwischen der Messmembran und der Stirnfläche des Grundkörpers ist eine Messzellenkammer ausgebildet, die bei Absolutdruckmesszellen evakuiert ist und bei Relativdruckmesszellen über einen Referenzluftpfad mit der Umgebung kommuniziert. An der Stirnfläche der Grundkörpers und an der dem Grundkörper zugewandten Fläche der Messmembran sind bei kapazitiven Druckmesszellen (hier nicht näher dargestellte) Elektroden vorgesehen, die zusammen einen Kondensator mit einer druckabhängigen Kapazität bilden. Einzelheiten hierzu sind dem Fachmann geläufig und brauchen nicht näher erläutert zu werden. Anstelle von kapazitiven Druckmesszellen können gleichermaßen Druckmesszellen mit anderen Messprinzipien zum Einsatz kommen, beispielsweise Druckmesszellen mit einem verformungsabhängigen Widerstand oder solche mit einem druckabhängigen Resonator.

Das Gehäuse 3 weist einen metallischen Werkstoff auf, beispielsweise Edelstahl. Das Gehäuse umfasst einen zylinderrohrartigen Wandabschnitt 32, von dem sich eine Schulter 33 radial einwärts erstreckt, wobei die radiale Schulter 33 eine Gehäuseöffnung 31 begrenzt, durch welche die Druckmesszelle mit einem Prozessmedium beaufschlagbar ist. Die innere Stirnfläche der Schulter 33 dient zudem als axiale Anschlagfläche 34 für die Druckmesszelle 2, bzw. für eine Dichtungsanordnung zwischen der Druckmesszelle 2 und dem Gehäuse 3.

Die Wärmeausdehnungskoeffizienten der Materialien von Gehäuse und Druckmesszelle sind unterschiedlich, so dass zur Entkopplung zwischen dem Gehäuse 3 und der Druckmesszelle 2 ein Entkopplungsring 4 vorgesehen ist. Der Entkopplungsring 4 soll insbesondere verhindern, dass die Wärmeausdehnungsunterschiede zu temperaturabhängigen Spannungen in der Messmembran 21 führen. Hierzu ist es zweckmäßig dass der Entkopplungsring 4 den gleichen Wärmeausdehnungskoeffizienten wie die Messmembran 21 und der Grundkörper der Druckmesszelle aufweist. In einer derzeit bevorzugten Ausgestaltung des erfindungsgemäßen Drucksensors ist der Entkopplungsring aus dem gleichen Material wie die Messmembran 21 und der Grundkörper gefertigt, nämlich Korund. Der Entkopplungsring 4 bewirkt, dass mögliche mechanische Spannungen und Hystereseerscheinungen aufgrund der Materialunterschiede weitgehend in der Dichtung zwischen der axialen Anschlagfläche 34 des Gehäuses 3 und dem Entkopplungsring 4 aufgefangen werden und somit kaum Auswirkungen auf die Druckmesszelle haben. Dementsprechend weist der Entkopplungsring einen Entkopplungsabschnitt auf, der als Zylinderrohrabschnitt mit einer solchen Wandstärke ausgebildet ist, dass die zur Entkopplung erforderliche radiale Steifigkeit erzielt wird. Die axiale Dimension des Entkopplungsabschnitts, also dessen Höhe, ist weniger kritisch. Ggf. kann es sogar vorteilhaft sein, wenn die Höhe so gering ist, dass sich der Entkopplungsring noch in geringem Maße verwinden kann, um ggf. auftretende winkelabhängige Unebenheiten in der Messmembran oder in der axialen Anschlagfläche 34 auszugleichen. In einer derzeit bevorzugten Ausgestaltung hat der Entkopplungsabschnitt eine Wandstärke von 4 mm und eine Höhe zwischen 10 mm und 2 mm.

Der Entkopplungsabschnitt weist eine erste Stirnfläche 41 und eine zweite Stirnfläche 42 auf, wobei die erste Stirnfläche 41 des Entkopplungsabschnitts der Messmembran der Druckmesszelle zugewandt ist und die zweite Stirnfläche 42 der axialen Anschlagfläche 34 des Gehäuses. Von der ersten bzw. der zweiten Stirnfläche erstreckt sich jeweils ein erster Vorsprung 43 bzw. zweiter Vorsprung 44 in axialer Richtung, auf dessen Stirnfläche jeweils eine Dichtfläche 45, 46 ausgebildet ist. Diese Vorsprünge haben beispielsweise eine Höhe von 0, 2 mm und die Dichtflächen eine Breite von 0,3 mm. Die Dichtflächen haben einen Innenradius von etwa 13 mm. Zwischen den Dichtflächen 45, 46 und der Messmembran 21 bzw. der axialen Anschlagfläche 34 ist jeweils eine Flachdichtung 51, 52 aus PTFE eingespannt. Die Flachdichtung hat eine Materialstärke von 0, 2mm und ist im Bereich der Dichtflächen auf 0,1 1 mm verformt (Die Verformung der Flachdichtungen ist in der Zeichnung nicht dargestellt).

Die axiale Einspannkraft, mit der die Druckmesszelle gegen die axiale Anschlagfläche vorgespannt ist und die Flachdichtungen verformt sind, beträgt etwa 500 N. Der Drucksensor ist für einen Überlastdruck von 4 bar ausgelegt.

Die Flachdichtung wurde im eingespannten Zustand einer Temperatur von 130°C über eine Zeit von 180 Minuten ausgesetzt.

Die Breite der Flachdichtung ist in erster Näherung unkritisch, solange die Dichtflächen am Entkopplungsring vollständig bedeckt sind. Die dargestellte größere Breite der Flachdichtungen erleichtert lediglich die Handhabung der Flachdichtungen bei der Montage.

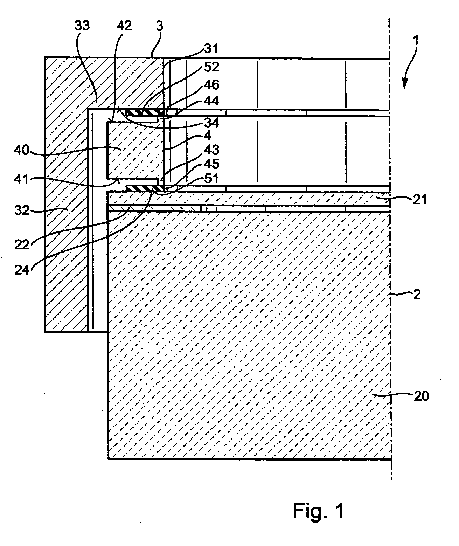

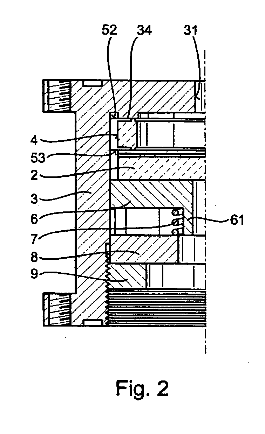

Weitere Einzelheiten zur Einspannung der Druckmesszelle werden anhand von Fig. 2 erläutert, wobei entsprechende Bauelemente mit identischen Bezugszeichen wie in Fig. 1 bezeichnet sind und nachfolgend nicht näher erläutert werden.

Die Druckmesszelle 2 ist in dem Gehäuse 3 elastisch vorgespannt, um Schwankungen der Einspannkraft zu minimieren. Hierzu ist auf der Rückseite der Druckmesszelle 2 ein lochscheibenförmiger Stempel 6 aufgelegt, welcher auf seiner von der Druckmesszelle abgewandten Rückseite ein Führungsrohr 61 für ein elastisches Element 7 aufweist, beispielsweise eine Druckfeder oder ein Tellerfederstapel. Das elastische Element 7 ist um das Führungsrohr 61 angeordnet. Auf der Rückseite des elastischen Elements 7 liegt ein Kopplungsring 8 auf, auf den schließlich ein Schraubring 9 einwirkt, welcher in ein Gewinde in der Wand des Gehäuses 3 eingreift. Über die Einschraubtiefe des Schraubrings 9 wird der Kompressionsgrad des elastischen Elements 7 und somit die axiale Einspannkraft in der gesamten Einspannkette bis zu den beiden Flachdichtungen 52 und 53 zwischen der Druckmesszelle 2 und dem Entkopplungsring 4 sowie zwischen dem Entkopplungsring und der axialen Anschlagfläche 34.

Der beschrieben Drucksensor wurde zunächst in einigen Exemplaren als Relativdrucksensor für einen Messbereich bis 100 mbar und einem Überlastdruck von 4 bar aufgebaut. Die Drucksensoren wiesen nach mehreren Zyklen über einen Temperaturbereich zwischen -40°C und 125°C eine Temperaturhysterese von Nullpunkt und Spanne auf, die weniger als 0,02% der Spanne betrug.

## Patentansprüche

1. Drucksensor (1), umfassend
   eine Druckmesszelle (2) mit einer ersten formsteifen, im wesentlichen planaren Dichtfläche;
   einen Gegenkörpe (40) mit einer Öffnung die von einer zweiten formsteifen, im wesentlichen planaren Dichtfläche umgeben ist; und
   ein Gehäuse (3) mit einer Medienöffnung (31) und einer ringförmigen axialen Anschlagfläche (34), welche die Medienöffnung umschließt;
   wobei die Druckmesszell (2) und der Gegenkörper (40) mit einer Einspannkraft in axialer Richtung, welche im wesentlichen senkrecht zu den Ebenen der Dichtflächen verläuft, gegeneinander gedrückt werden;
   wobei zwischen der ersten Dichtfläche und der zweiten Dichtfläche eine Flachdichtung (51) mittels der axialen Einspannkraft freiliegend im Hauptschluss eingespannt ist,
   **dadurch gekennzeichnet, dass** der Gegenkörper als ein Entkopplungsring (4) ausgestaltet ist, welcher zwischen der Anschtagfläche (34) und der Druckmesszelle (2) in dem Gehäuse (3) angeordnet und axial eingespannt ist,
   die erste Flachdichtung (51) zwischen der ersten Dichtfläche der Druckmesszelle und der zweiten Dichtfläche auf der der Druckmesszelle zugewandten Seite des Entkopplungsrings (4) und eine zweite Flachdichtung (52) zwischen dem Entkopplungsring und der Anschiagfläche (34) vorgesehen sind,
   der Entkopplungsring einen ringförmigen, insbesondere zylindrischen, Entkopplungsabschnitt (41, 42) aufweist,
   und
   sich zumindest von einer Stirnfläche (41) des Entkopplungsabschnitts, welche der Druckmesszelle zugewandt ist, ein ringförmiger Vorsprung (43) in axialer Richtung erstreckt, auf dessen Stirnfläche die zweite Dichtfläche ausgebildet ist.

**2.** Drucksensor nach Anspruch 1, wobei die Flachdichtung einen thermoplastischen Werkstoff, insbesondere PTFE, aufweist.

**3.** Drucksensor nach Anspruch 2, wobei die Flachdichtung durch die axiale Einspannung so weit komprimiert ist, dass der eingespannte Bereich der Flachdichtung transparent ist.

**4.** Drucksensor nach einem der Ansprüche 1 bis 3, wobei die Flachdichtung im eingespannten Zustand eine Materialstärke von nicht weniger als 0,03 mm, vorzugsweise nicht weniger als 0,06 mm und besonders bevorzugt von nicht weniger als 0,08 mm aufweist.

**5.** Drucksensor nach einem der Ansprüche 1 bis 4, wobei die Flachdichtung im eingespannten Zustand eine Materialstärke von nicht mehr als 0,5 mm, vorzugsweise nicht mehr als 0,3 mm und besonders bevorzugt von nicht mehr als 0,2 mm aufweist.

**6.** Drucksensor nach einem der Ansprüche 1 bis 5, wobei Druckmesszelle bezüglich des Gegenkörpers in axialer Richtung eine elastische Vorspannung FV aufweist.

**7.** Drucksensor nach einem der Ansprüche 1 bis 6, wobei die Flachdichtung im eingespannten Zustand einer Temperung bei einer Temperatur von nicht weniger als 80°C, vorzugsweise von nicht weniger als 100°C und besonders bevorzugt von nicht weniger als 150°C ausgesetzt war.

**8.** Drucksensor nach einem der vorhergehenden Ansprüche, wobei die Wandstärke des Entkopplungsabschnitts nicht weniger als das 4-fache, bevorzugt nicht weniger als das 8-fache, und besonders bevorzugt nicht weniger als das 12-flache der Breite der zweiten Dichtfläche beträgt.

**9.** Drucksensor nach einem der vorhergehenden Ansprüche, wobei die Druckmesszelle einen Grundkörper und eine Messmembran umfasst, die einen einkristallinen oder keramischen Werkstoff, insbesondere Korund, aufweisen.

**10.** Drucksensor nach Anspruch 9, wobei der Entkopplungsring das gleiche Material wie der Grundkörper und die Messmembran aufweist.

**11.** Drucksensor nach Anspruch 1 oder 11, wobei die Höhe des Entkopplungsabschnitts nicht weniger als das 0,25-fache und bevorzugt nicht weniger als die Hälfte der Wandstärke des Entkopplungsabschnitts beträgt, und wobei die Höhe des Entkopplungsabschnitts in axialer Richtung nicht mehr als das 1,5 flache und bevorzugt nicht mehr als das 0,8 fache der Wandstärke des Entkopplungsabschnitts beträgt.

**12.** Drucksensor nach einem der vorhergehenden Ansprüche, wobei der axiale Abstand der zweiten Dichtfläche von der angrenzenden Stirnfläche des Entkopplungsabschnitts nicht kleiner ist als die Differenz zwischen der Materialstärke der Flachdichtung im nicht eingespannten Zustand und der Materialstärke der Flachdichtung im eingespannten Zustand.

**13.** Drucksensor nach einem der vorhergehenden Ansprüche, wobei der Innenradius der zweiten Dichtfläche mit dem Innenradius der angrenzenden Stirnfläche des Entkopplungsabschnitts fluchtet.

**14.** Drucksensor nach einem der vorhergehenden Ansprüche, wobei die Abmessungen der Einspannung der Flachdichtung zwischen dem Entkopplungsring und der axialen Anschlagsfläche des Gehäuses im wesentlichen symmetrisch zu den Abmessungen der Einspannung der Flachdichtung zwischen dem Entkopplungsring und der Druckmesszelle sind.

**Claims**

**1.** Pressure sensor (1) comprising
a pressure measuring cell (2) with a first, essentially planar sealing surface which is dimensionally stable;
a counterbody (40) with an opening which is surrounded by a second, essentially planar sealing surface which is dimensionally stable; and
a housing (3) with a medium opening (31) and an annular axial stopping face (34), which surrounds the medium opening;
wherein the pressure measuring cell (2) and the counterbody (40) are pressed against one another with a clamping force in the axial direction which is essentially perpendicular to the planes of the sealing surfaces;
wherein a flat seal (51) is clamped between the first sealing surface and the second sealing surface via the axial clamping force, positioned free in the main body;
**characterized in that**
the counterbody is designed as a decoupling ring (4), which is arranged between the stopping face (34) and the pressure measuring cell (2) in the housing (3) and is clamped axially,
the first flat seal (51) is provided between the first sealing surface of the pressure measuring cell (2) and the second sealing surface on the side of the decoupling ring (4) facing towards the pressure measuring cell, and a second flat seal (52) is provided between the decoupling ring (52) and the stopping face (34),

the decoupling ring has an annular, particularly cylindrical decoupling section (41, 42) and

an annular projection (43), on the front face of which the second sealing surface is formed, extends at least from a front face of the decoupling section (41) in an axial direction, said front face facing toward the pressure measuring cell.

2. Pressure sensor as claimed in Claim 1, wherein the flat seal comprises a thermoplastic material, particularly PTFE.

3. Pressure sensor as claimed in Claim 2, wherein the axial clamping compresses the flat seal to such an extent that the clamped area of the flat seal is transparent.

4. Pressure sensor as claimed in one of the Claims 1 to 3, wherein, in a clamped state, the flat seal has a material thickness of not less than 0.03 mm, preferably not less than 0.06 mm and most preferably of not less than 0.08 mm.

5. Pressure sensor as claimed in one of the Claims 1 to 4, wherein, in a clamped state, the flat seal has a material thickness of not more than 0.5 mm, preferably not more than 0.3 mm and most preferably of not more than 0.2 mm.

6. Pressure sensor as claimed in one of the Claims 1 to 5, wherein in the axial direction the pressure measuring cell has an elastic pretension FV relative to the counterbody.

7. Pressure sensor as claimed in one of the Claims 1 to 6, wherein, in a clamped state, the flat seal is subject to conditioning at a temperature of not less than 80 °C, preferably not less than 100 °C and most preferably not less than 150 °C.

8. Pressure sensor as claimed in one of the previous claims, wherein the wall thickness of the decoupling section is not less than four times, preferably not less than eight times and most preferably not less than twelve times the width of the second sealing surface.

9. Pressure sensor as claimed in one of the previous claims, wherein the pressure measuring cell comprises a meter body and a process isolating diaphragm, which feature a monocrystalline or ceramic material, particularly corundum.

10. Pressure sensor as claimed in Claim 9, wherein the decoupling ring has the same material as the meter body and the measuring membrane.

11. Pressure sensor as claimed in Claim 1 or 11, wherein the height of the decoupling section is not less than a quarter and preferably not less than half the wall thickness of the decoupling section, and wherein the height of the decoupling section in the axial direction is not more than 1.5 times and preferably not more than 0.8 times the wall thickness of the decoupling section.

12. Pressure sensor as claimed in one of the previous claims, wherein the axial distance of the second sealing surface from the adjacent front face of the decoupling section is not smaller than the difference between the material thickness of the flat seal in the unclamped state and the material thickness of the flat seal in the clamped state.

13. Pressure sensor as claimed in one of the previous claims, wherein the inner radius of the second sealing surface is flush with the inner radius of the adjacent front face of the decoupling section.

14. Pressure sensor as claimed in one of the previous claims, wherein the dimensions of the clamping of the flat seal between the decoupling ring and the axial stopping face of the housing are primarily symmetrical to the dimensions of the clamping of the flat seal between the decoupling ring and the pressure measuring cell.

**Revendications**

1. Capteur de pression (1) comprenant
une cellule de mesure de pression (2) avec une première surface d'étanchéité indéformable, pour l'essentiel plane ;
un contre-corps (40) avec une ouverture, qui est entourée par une deuxième surface d'étanchéité indéformable, pour l'essentiel plane ; et
un boîtier (3) avec une ouverture de produit (31) et une surface de butée (34) axiale annulaire, laquelle entoure l'ouverture de produit ;
pour lequel la cellule de mesure de pression (2) et le contre-corps (40) sont pressés l'un contre l'autre avec une force de serrage en direction axiale, laquelle est pour l'essentiel perpendiculaire au plan des surfaces d'étanchéité ;
un joint plat (51) étant serré entre la première surface d'étanchéité et la deuxième surface d'étanchéité au moyen de la force de serrage axiale, placé librement dans le corps principal ;
**caractérisé en ce**
**que** le contre-corps est conçu en tant que bague de découplage (4), laquelle est disposée dans le boîtier (3), entre la surface de butée (34) et la cellule de mesure de pression (2), et serrée axialement,
**que** le premier joint plat (51) est prévu entre la première surface d'étanchéité de la cellule de mesure de pression (2) et la deuxième surface d'étanchéité sur le côté faisant face à la cellule de mesure de pression de la bague de découplage (4), et un deuxième joint (52) est prévu entre la bague de découplage et la surface de butée (34),

**que** la bague de découplage comporte une section de découplage (41, 42) annulaire, notamment cylindrique,

et

**qu'**au moins une saillie (43) annulaire, sur la surface frontale de laquelle est formée la deuxième surface d'étanchéité, s'étend en direction axiale à partir d'une surface frontale de la section de découplage (41).

2. Capteur de pression selon la revendication 1, pour lequel le joint plat est constitué d'un matériau thermoplastique, notamment en PTFE.

3. Capteur de pression selon la revendication 2, pour lequel le joint plat est comprimé par le serrage axial jusqu'à ce que la zone serrée du joint plat devienne transparente.

4. Capteur de pression selon l'une des revendications 1 à 3, pour lequel le joint plat présente, à l'état serré, une épaisseur de matériau d'au moins 0,03 mm, de préférence d'au moins 0,06 mm et particulièrement de préférence d'au moins 0,08 mm.

5. Capteur de pression selon l'une des revendications 1 à 4, pour lequel le joint plat présente, à l'état serré, une épaisseur de matériau d'au plus 0,5 mm, de préférence d'au plus 0,3 mm et particulièrement de préférence d'au plus 0,2 mm.

6. Capteur de pression selon l'une des revendications 1 à 5, pour lequel la cellule de mesure de pression présente en direction axiale une précontrainte élastique FV par rapport au contre-corps.

7. Capteur de pression selon l'une des revendications 1 à 6, pour lequel le joint plat était exposé, à l'état serré, à une trempe de durcissement, à une température d'au moins 80 °C, de préférence d'au moins 100 °C et particulièrement de préférence d'au moins 150 °C.

8. Capteur de pression selon l'une des revendications précédentes, pour lequel l'épaisseur de paroi de la section de découplage n'est pas inférieure à quatre fois, de préférence à huit fois et particulièrement de préférence à douze fois la largeur de la deuxième surface d'étanchéité.

9. Capteur de pression selon l'une des revendications précédentes, pour lequel la cellule de mesure de pression comporte un corps de base et une membrane de mesure, qui sont constitués d'un matériau monocristallin ou céramique, notamment en corindon.

10. Capteur de pression selon la revendication 9, pour lequel la bague de découplage présente le même matériau que le corps de base et la membrane de mesure.

11. Capteur de pression selon la revendication 1 ou 11, pour lequel la hauteur de la section de découplage est au moins égale à 0,25 fois et de préférence à la moitié de l'épaisseur de paroi de la section de découplage, et pour lequel la hauteur de la section de découplage en direction axiale est au plus égale à 1,5 fois et de préférence au plus à 0,8 fois l'épaisseur de paroi de la section de découplage.

12. Capteur de pression selon l'une des revendications précédentes, pour lequel la distance axiale de la deuxième surface d'étanchéité par rapport à la surface frontale avoisinante de la section de découplage n'est pas inférieure à la différence entre l'épaisseur de matériau du joint plat à l'état non serré et l'épaisseur de matériau du joint plat à l'état serré.

13. Capteur de pression selon l'une des revendications précédentes, pour lequel le rayon intérieur de la deuxième surface d'étanchéité affleure le rayon intérieur de la surface frontale avoisinante de la section de découplage.

14. Capteur de pression selon l'une des revendications précédentes, pour lequel les dimensions du serrage du joint plat situé entre la bague de découplage et la surface de butée axiale du boîtier sont pour l'essentiel symétriques par rapport aux dimensions du serrage du joint plat situé entre la bague de découplage et la cellule de mesure de pression.

Fig. 1

Fig. 2

**IN DER BESCHREIBUNG AUFGEFÜHRTE DOKUMENTE**

**In der Beschreibung aufgeführte Patentdokumente**

- DE 19628551 B4
- WO 02063263 A1
- WO 2005012865 A1